# EUROPEAN PATENT APPLICATION

(11) **EP 2 160 009 A1**
(43) Date of publication of application: **03.03.2010**
(21) Application number: 09168521.4
(22) Date of filing: 24.08.2009
(51) Int. Cl.: H04N 1/60

(54) **Method for generating a color chart**

(30) Priority: 27.08.2008 JP 2008218820
(71) Applicant: CANON KABUSHIKI KAISHA, Ohta-ku Tokyo 146-8501 (JP)
(72) Inventor: Hatori, Kazushige, Ohta-ku Tokyo (JP); Kasahara, Akihiro, Ohta-ku Tokyo (JP)
(74) Representative: Garner, Jonathan Charles Stapleton

(57) **Abstract**

A method is provided for generating a color chart for a printer, which color chart comprises a plurality of elements. The method comprises obtaining reference color data representing colors output by the printer, when the printer is in a reference state. Further, comparison color data representing colors output by the printer, when the printer is in another state is obtained. Differences in color between corresponding elements of the reference color data and the comparison color data are determined and at least one region of the output color space of the printer is classified as a linear region in which the differences vary substantially linearly. The method includes selecting colors of the elements of the color chart on the basis of the linear region.

## Description

### BACKGROUND OF THE INVENTION

### Field of the Invention

The present invention relates to a method for generating a color chart.

### Description of the Related Art

Conventionally, a color printer such as an electrophotographic printer using color materials of cyan (C), magenta (M), yellow (Y), and black (K) is calibrated with respect to target densities which are set for respective primary colors.

However, the conventional primary color calibration can correct primary colors, but cannot correct colors such as gray and flesh color reproduced by combinations of CMYK colors. For example, since color fluctuations occur due to developing efficiency, a change in fixing temperature, and the like, which are derived from an environmental factor or temporal change, a primary color correction technique cannot cope with other colors.

In order to solve such problem, color calibration has been proposed (Japanese Patent Laid-Open No. 2007-089031).

However, Japanese Patent Laid-Open No. 2007-089031 describes only an overview in which K amount correction and CMY correction are separately performed. That is, this reference does not describe a practical color calibration method, for example, a method of recognizing fluctuations from an ideal state of a printer for the purpose of color calibration, and a method of calculating parameters based on the fluctuations.

### SUMMARY OF THE INVENTION

The present invention provides an image processing method and image processing apparatus, which implements sufficient color calibration using a smaller number of color charts, and to which the method of recognizing fluctuations from an ideal state of a printer for the purpose of color calibration, and the method of calculating parameters based on the fluctuations are applied.

In order to solve the above problems, an image processing apparatus according to the present invention as follows.

The present invention in its first aspect provides a method for generating a color chart as specified in claims 1 to 8.

The present invention in its second aspect provides a color chart as specified in claim 9.

The present invention in its third aspect provides a printer as specified in claim 10.

The present invention in its fourth aspect provides a program as specified in claim 11.

The present invention in its fifth aspect provides a computer-readable storage medium as specified in claim 12.

According to the present invention, color correction for, for example, gray and flesh color, can be sufficiently attained by color calibration using a smaller number of color charts.

Further features of the present invention will become apparent from the following description of exemplary embodiments (with reference to the attached drawings).

### BRIEF DESCRIPTION OF THE DRAWINGS

Fig. 1 is a block diagram showing an example of the configuration that implements color calibration of an image processing apparatus according to an embodiment of the present invention;

Fig. 2 is a block diagram for explaining the functions of a color correction unit in the color calibration according to the embodiment;

Fig. 2A shows an example of a color chart according to an embodiment of the present invention.

Fig. 3 is a block diagram showing an example of the operation of an output processing unit including a fluctuation model and output processing unit (ideal state);

Fig. 4 is a graph showing the relationship between data output values and densities of a device color in a printer color gamut, and a sampling model in the related art;

Fig. 5 is a graph showing the relationship between the data output values and densities of a device color in a printer color gamut, and an improved sampling model in the related art;

Fig. 6 is a graph showing the relationship between data output values and densities of device colors in a printer color gamut, and a sampling model based on a color difference value fluctuation amount according to the embodiment;

Fig. 7 is a flowchart showing an example of the creating procedure of a conversion state of the output processing unit including the fluctuation model while focusing on the linearity of fluctuations;

Fig. 8 is a flowchart showing an example of the generation procedure of a conversion table for correction which configures the color correction unit according to the embodiment;

Fig. 9 is a block diagram showing inverse matching in the conversion state of the output processing unit including the fluctuation model;

Fig. 10 is a block diagram showing conversion of the color correction unit;

Fig. 11 is a view showing an LUT in which Lab values are associated with CMY grid points;

Fig. 12 is a view for explaining the conventional linear interpolation by dividing a rectangular parallelepiped;

Fig. 13 is a view showing an LUT in which Lab values are associated with CMY grid points to explain an inverse matching method using a starting point of fluctuation according to the embodiment;

Fig. 14 is a flowchart showing the processing procedure of color correction corresponding to four CMYK inputs;

Fig. 15 is a block diagram showing an example of the configuration of a color correction unit corresponding to four CMYK inputs; and

Fig. 16 is a block diagram showing an example of the configuration of a correction unit which preserves a K amount of CMYK colors intact, and corrects only CMY values using a CMY correction unit according to the embodiment.

### DETAILED DESCRIPTION OF THE EMBODIMENTS

Embodiments of the present invention will be described in detail hereinafter with reference to the accompanying drawings.

### <Configuration Example That Implements Color Calibration of Image Processing Apparatus of this Embodiment>

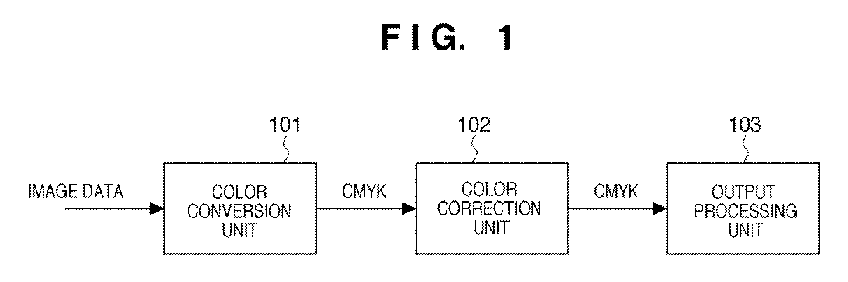

Fig. 1 is a block diagram schematically showing a conversion process that is performed on image data in an image processing apparatus.

An image processing apparatus exemplified in this embodiment converts image data sent from a computer or the like to CMYK values as color data of output colors of a printer using a color conversion unit 101. Next, a color correction unit 102 converts the CMYK values sent from the color conversion unit 101 into corrected values, so that the printer can obtain reproduction colors equivalent to a model printer. The model printer represents a printer which functions based on designed values or always in an ideal state free from any fluctuations. An output processing unit 103 performs halftoning processing of an image using the CMYK values sent from the color correction unit 102, and also performs output processing onto a paper sheet, thus obtaining printed matter.

Note that the color conversion unit 101 and color correction unit 102 of this embodiment may be mounted in a body with the output processing unit 103, and may be implemented by a controller (not shown) of the printer. A control unit (not shown) used to control the printer may be added, and may implement the aforementioned units. In the following description, these units are implemented by the controller of the printer.

### [First Embodiment]

### <Overview of Functions of Color Correction Unit 102>

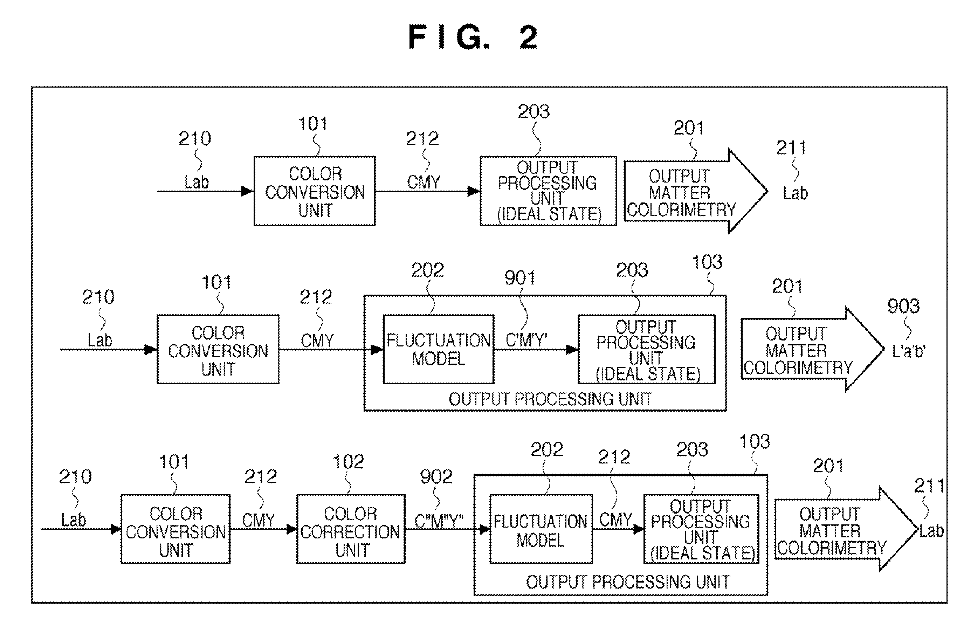

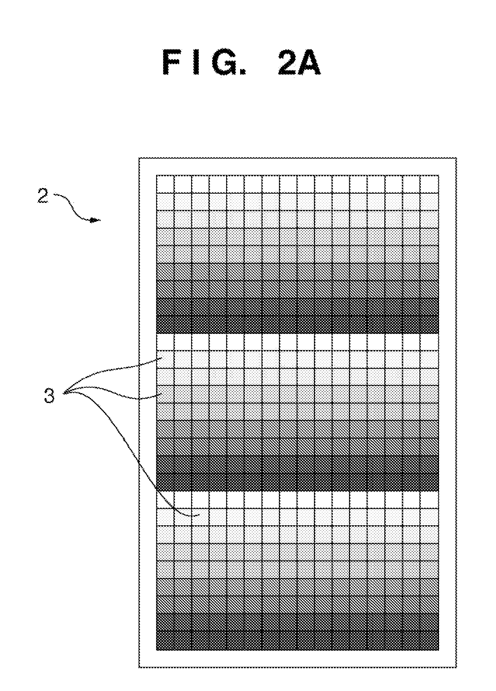

Fig. 2 is a block diagram of an abstract model for explaining the purpose of the color correction unit 102 shown in Fig. 1. In this embodiment, the following settings are made for the sake of simplicity. That is, assume that image data is CIELab data as colors in a device independent color space. Also, assume that device color values sent to the color correction unit 102, and those sent from the color correction unit 102 to the output processing unit 103 are CMY values without any K amount value i.e. black ink data is excluded from consideration. However, as will be understood by the skilled person, image data may be other image data such as RGB data, and the color correction unit 102 may perform correction including a K value.

### (Ideal Printer Model)

The upper stage of Fig. 2 is a block diagram which represents an idealized printing system.

In this case, all Lab values 210 of a color gamut of the printer, which are sent to the color conversion unit 101 as image data, are converted into corresponding CMY values 212 as color values of the printer. An ideal output processing unit 203 , which receives the color values CMY of the printer, executes output processing of an image corresponding to the image data onto a paper sheet. Colors Lab 211, which are obtained by executing output matter colorimetry 201 of the output image using a colorimeter, and are expressed by device independent color space values, match the Lab values 210 input to the color conversion unit 101 as the image data.

### (Fluctuation Model)

The middle stage of Fig. 2 is a block diagram showing a state in which the printer causes color reproduction fluctuations i.e. the printer does not function as an ideal printer. In this middle stage, the printer (output processing unit 103) is represented by the ideal printer 203 and a fluctuation model 202.

When the output state of the printer fluctuates due to an environmental factor or temporal change, and the color reproduction of colors changes, the output values Lab 211 from the output processing unit 203 change to values L'a'b' 903. As shown in the middle stage of Fig. 2, fluctuations derived from an environmental factor or temporal change can be represented by a "fluctuation model 202" which occurs in the output processing unit 103 corresponding to Fig. 1, that is, in a stage preceding the output processing unit (which is still presumed to be in an ideal state) 203. This fluctuation model 202 changes the actually sent CMY values 212 to C'M'Y' values 901. The abstract concept of such a fluctuation model 202 can help in modeling and correcting for printer output fluctuations and color reproduction fluctuations.

### (Function of Color Correction Unit 102)

Hence, as shown in the lower stage of Fig. 2, the color correction unit 102 is arranged in a subsequent stage of the color conversion unit 101.

The color correction unit 102 performs color correction, so that the device color values sent from the fluctuation model 202 to the output processing unit (ideal state) 203 return from the C'M'Y' values 901 shown in the middle stage as a result of conversion of the fluctuation model 202 to the CMY values 212. More specifically, the color correction unit 102 performs conversion from the CMY values 212 to C"M"Y" values 902 and may be thought of as sending the C"M"Y" values to the fluctuation model 202. That is, the color correction unit 102 functions as a conversion table with respect to the assumed fluctuation model 202 inside the output processing unit 103.

In the configuration of this embodiment, as shown in the lower stage of Fig. 2, fluctuations (here represented as fluctuation model 202) that occur inside the output processing unit 103 are measured based on the output matter colorimetry 201. Then, when the color correction by the color correction unit 102 is generated and updated, the printer can always stably output colors as if it was an ideal printer in the ideal state.

Note that this embodiment will explain the color correction. Likewise, since primary colors can be corrected, primary colors and other colors can be stably output.

### <Determining the effect of the fluctuation model>

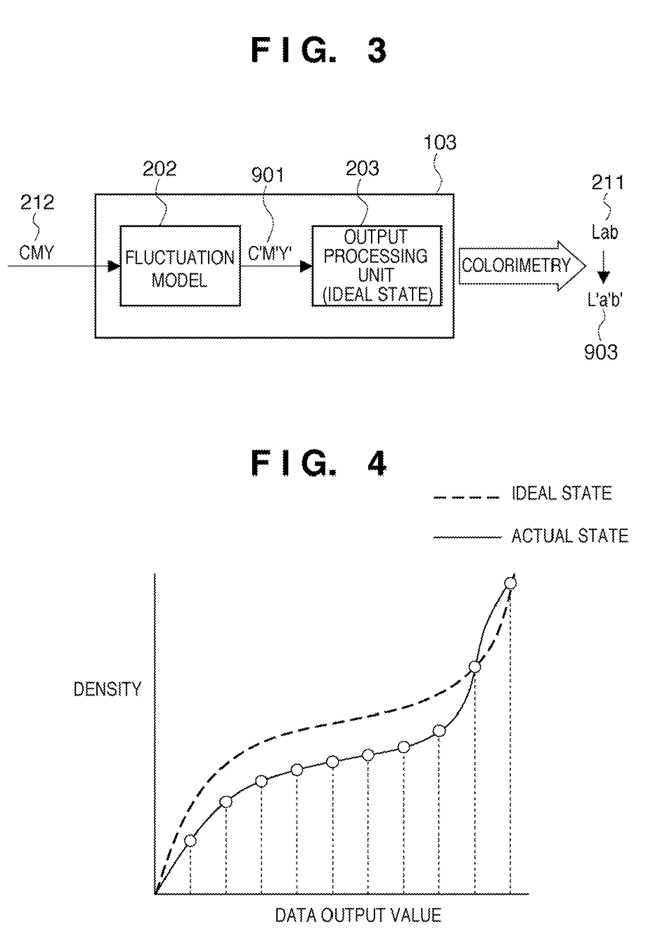

Fig. 3 is a block diagram showing the conversion state of the output processing unit 103 including the fluctuation model 202 and the output processing unit (ideal state) 203 shown in Fig. 2.

In the ideal state, so without any presumed fluctuation model 202, the input CMY values 212 are directly converted into the Lab values 211 as a colorimetry result via the output processing unit (ideal state) 203. On the other hand, in a normal printer which suffers an environmental factor or temporal change, the input CMY values 212 are converted into the C'M'Y' values 901 and this can be thought of as conversion via the fluctuation model 202. As a result, the Lab values 211 fluctuate to the L'a'b' values 903.

Color charts used to measure a printer state for all possible printer output colors, for example, n × n × n colors for a color gamut defined by CMY colors in case of a printer in which primary colors have n steps, may be actually output. By colorimetrically measuring the color charts of n × n × n colors, the actual conversion state of the output processing unit 103 including environmental and temporal fluctuations can be measured. If n is 256, the number of colors is 16,780,000 in the CMY color gamut, and is 4,300,000,000 as a combination of n × n × n × n colors in a CMYK color gamut. Outputting a color chart having 16,780,000 elements would clearly require considerable time and resources. Therefore, in practice, a limited number of points or colors are output on a color chart (i.e. a relatively small number of elements are printed compared to the number of colors that can be printed by the printer). Fig. 2A shows a color chart as printed on a single sheet 2 of e.g. paper. The color chart comprises a plurality of elements 3 of size 7X7mm. The size of the elements can of course be varied. The elements output on a color chart are typically square or rectangular; however, other shapes are possible. The elements are shown here as adjoined to each other; however the elements may be spaced from each other. The chart may be output on one or more sheets of paper or other printable media.

The color chart once printed by the printer may be conveyed to a destination separate to the printer, for example a service center, for colorimetric measurement. Alternatively, the colorimetric measurement may be performed in situ with the printer.

### (Calibration of the color correction unit)

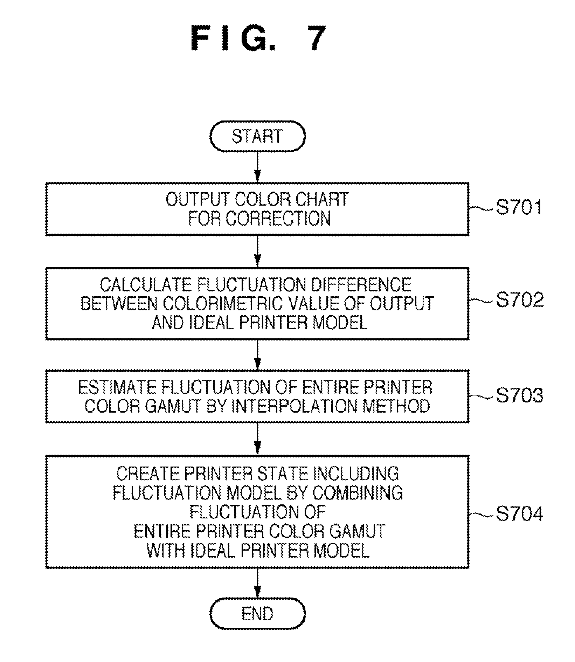

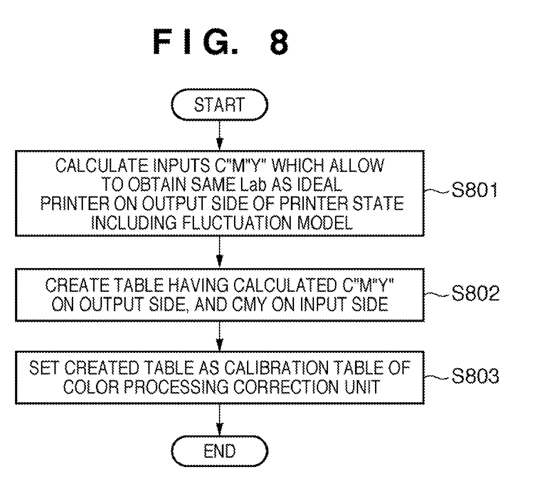

Calibration of the color correction unit 102 will now be described with reference to Figs. 7 and 8. Different printer models have different operating characteristics. For a given printer model, a normal output look-up table can be prepared by operating the printer in optimum conditions and measuring the color of elements of at least one color chart printed by the printer. Preferably, more than one color chart is printed and as large a number of different colored chart elements as possible are printed and measured with a colorimeter. In the present embodiment the normal output look-up table is prepared and stored in the color correction unit 102 of the printer. In some embodiments, the normal output look-up table is prepared by the manufacturer of the printer (or some other party) in advance and is not varied during operation of the color correction unit 102. In this way an "idealized" or optimum performance of the printer 103 is recorded in the normal output look-up table.

Figs. 7 and 8 show steps of the calibration of the color correction unit 102 of a normal printer in normal conditions. The steps of this method are performed by the printer controller or by an independent control unit. Firstly, in step S701, the printer prints a color chart including a plurality of elements onto a piece of paper or other print medium. The printed elements are then measured using a colorimeter and the results are input into an information processing apparatus connected to the printer or to the printer itself. In step S702, the measured values of the patches are compared with the corresponding values in the normal output look-up table.

The elements printed by the printer 103 represent only certain colors in the C,M,Y space (i.e. a relatively small number of patches are printed compared to the number of colors that can be printed by the printer). Accordingly, in step S703 the measured differences are interpolated across the C,M,Y space in order to predict a deviation between the actual print performance of the printer 103 and that desired according to the normal output look-up table for other (not measured) C,M,Y values. In step S704 the difference data is added to the normal output look-up table to generate an actual look-up table that represents the actual output of the printer in its actual state. The actual output look-up table associates input values with colors L'a'b' for 35,937 colors, for example, when each device color value C,M,Y has 33 steps.

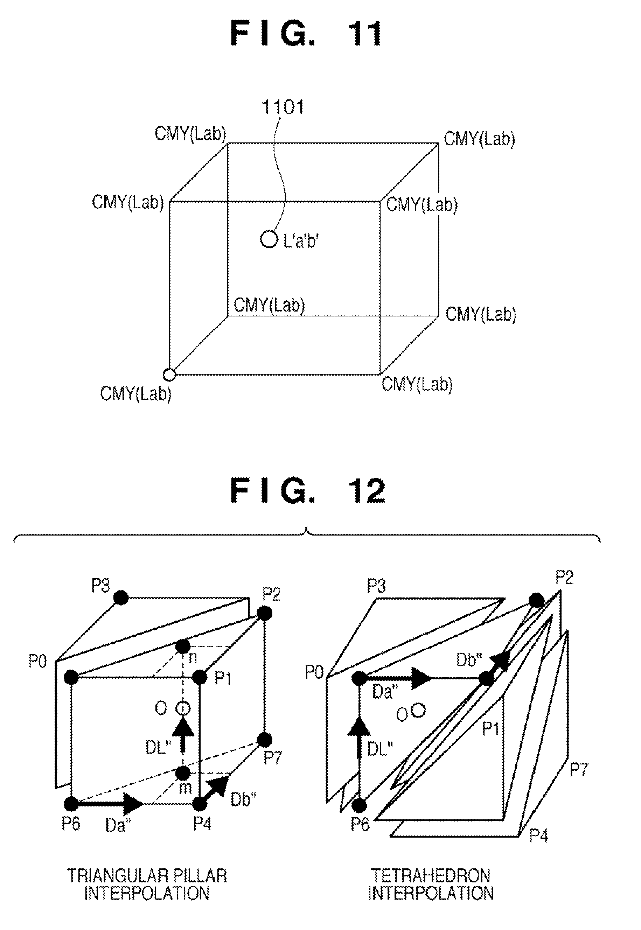

Fig. 8 shows the setting of a look-up table in the color correction unit 102. In step S801, the difference data is analyzed to determine how input C,M,Y data should be altered to create modified data C'',M'',Y'' which would produce an output that is the same as or closer to the values in the normal output look-up table. This process will be described later in connection with Figs. 11 to 13.

In step S802, each input value C,M,Y of the color space is analyzed as described above to create a color-correction look-up table. In step S803, the resulting color-correction look-up table is set as the look-up table for the color correction unit.

In use, the color correction unit 102 converts received CMY image data to data values C'',M'',Y'' in accordance with the color correction look-up table and then passes the converted image data to the printer 103 for printing. In this way the color correction unit 102 improves the color reproduction of image data sent to the printer for printing. The color correction unit 102 may be implemented by a logic circuit and the like or by microprograms.

### (Determining colors of elements of the color chart to be printed)

As mentioned above, a number of color elements corresponding to selected colors in a color space are printed in the color chart for colorimetric measurement. Conventionally, the colors for are selected evenly across the color space. For example, a cubic sampling pattern may be selected such that the colors of the elements of the chart correspond to a cubic array of points in the color space. This approach is illustrated in Fig. 4.

Fig. 4 is a graph of data output values against density. The data output values correspond to values (C,M,Y) along a line in the C,M,Y color space. For example, the values could represent monochromatic colors from white to black. In a conventional color chart, elements corresponding to different shades of grey would be printed in regular intervals as shown by the sampling points (circles) in Fig. 4. The vertical axis in Fig. 4 represents a density value measured by a colorimeter.

Fig. 4 includes two lines, one representing an ideal state (dotted line) and one representing an actual state (solid line). The ideal state line represents a performance of the printer when it is in an ideal state and corresponds to values in the normal output look-up table. On the other hand, the actual state represents the results of performing colorimetric measurement on a printer that is not in ideal conditions. The actual state represents a result that a user is likely to experience because environmental conditions vary, and because, over time, the printer's characteristics change.

As described above, difference data is interpolated across the color space in step S703 based on a color chart including a number of elements. As the number of elements printed is much lower than the total number of colors that can be printed, this interpolation inevitably introduces some errors or approximations into the color correction process. It is desirable to reduce these errors as much as possible.

It can be seen from Fig. 4 that by taking periodic samples, the deviations of the actual state from the ideal state may not be accurately found. For example, towards the right hand side of Fig. 4 the density of the actual state rises above the ideal state. However, with the sampling points selected in Fig. 4 this rise would not be represented in the measured difference data.

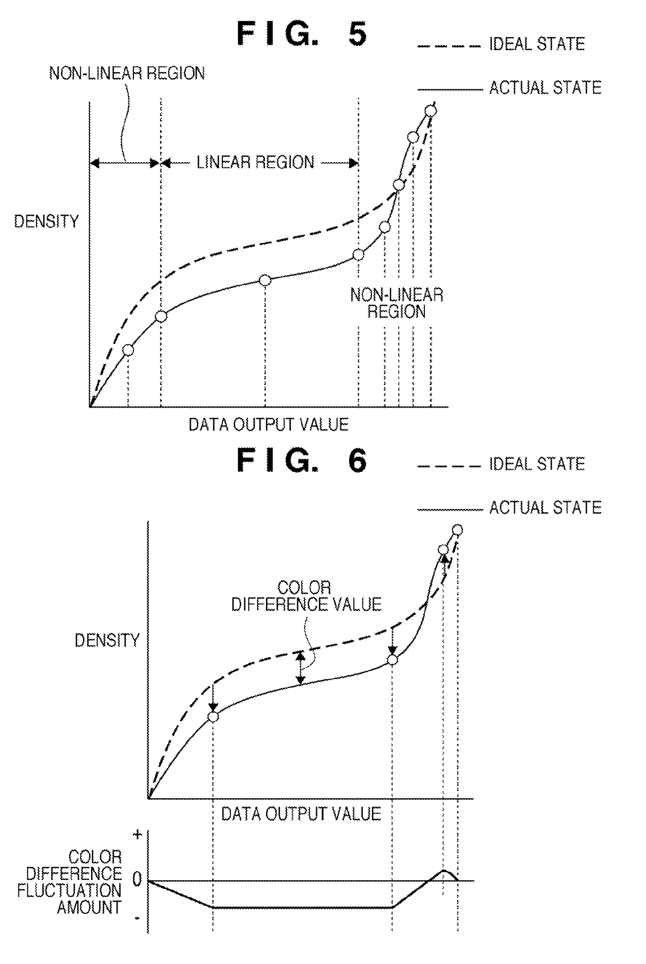

The inventors of the present invention have investigated how the actual state of printers and the ideal states of printer (as represented by the normal output look-up table described above) vary. The inventors found that the manner of deviation of the actual state from the ideal state tends to be predictable. For some regions of the color space, printers tend to deviate from the ideal state in a linear manner; whereas for other regions of the color space, printers tend to deviate from the ideal state in a non-linear manner. In the linear region a linear interpolation method will tend to work quite well even with few sampling points, whereas in a non-linear region more frequent sampling points may be needed to obtain a satisfactory result. This will now be described in more detail in connection with Figs. 5 and 6.

Fig. 5 is a graph corresponding to Fig. 4 described above. Fig. 4 differs from Fig. 5 in the positioning of the sampling points. Looking at Fig. 5, it can be seen that on the left hand side the actual state and ideal state lines start from a common origin. However, the density of the ideal state line increases more quickly than that of the actual state line. In this region, labeled "non-linear region", the difference between the ideal state and the actual state increases as data output values vary on the horizontal axis i.e. as we move along the x axis.

Towards the middle of Fig. 5, the curves level out and there is a "linear region" in which the ideal state curve and the actual state curve remain approximately constantly separated. Towards the right hand side of Fig. 5, a second "non-linear region" occurs. In the second non-linear region, the distance between the ideal state curve and the actual state curve narrows and then increases again after the curves have crossed.

In order to more accurately interpolate the difference between the actual state of the printer and the ideal state of the printer, it would be desirable to have more sampling points in the non-linear regions of the color space, in which regions the relationship between the actual performance of the printer and the ideal performance of the printer varies more quickly, than in the linear regions in which the performance variation is slower. Such an arrangement is shown in Fig. 5 in which the sampling points have are more frequent in the non-linear regions than in the linear region.

The above scheme can be improved further as will be explained with reference to Fig. 6. Fig. 6 corresponds to Figs. 4 and 5 but additionally shows the result of interpolation of the differences in a chart below the graph showing "color difference fluctuation amount". As the Inventors have discovered that the deviation of the printers is to somewhat predictable, it is acceptable to further reduce the number of sampling points as shown in Fig. 6. In this Figure, a lower number of sampling points are selected by subdividing the second non-linear region into linear sub-regions. Thus by selecting appropriate sampling points (chart element colors) at the edges of linear sub-regions, when the differences are interpolated, we can still produce a good approximation of the actual differences between the actual state of the printer and the ideal state of the printer.

A method of creating a color chart including a plurality of elements is now described. These steps are typically performed when the printer is designed and tested and a copy of the color chart is stored in each printer's memory. In some other embodiments, the color chart could be downloaded to the printer or an information processing apparatus later, perhaps as part of a program or software update.

As described earlier, the manufacturer of the printer (or some other party) creates a normal output look-up table providing data about the ideal operation of the printer. Further, the manufacturer (or some other party) also measures output of the printer in different environmental conditions and after varying periods of use. In each measurement condition, the printer prints at least one color chart and preferably as many color elements corresponding to different colors in the color space as possible in order to provide data about the deviation of the printer from its ideal state.

The difference between the printers actual performance and its ideal performance can then be examined in each of the different conditions and linear and non-linear regions can be identified. As explained above, the linear regions are regions in which difference between the measured output colors of the printer and the measured colors of the printer in ideal conditions vary linearly as you move from one color to a similar color in that region of the color space. In contrast, non-linear regions are regions in which the difference between the measured output colors of the printer and the measured colors of the printer in ideal conditions vary as you move from one color to a similar color in that region of the color space.

Once the linear and non-linear regions have been identified, the manufacturer (or other party) selects colors of the elements of at least one color chart to be printed by the printer. The colors are selected so that there is a greater density of color elements (sampling points) corresponding to colors in at least one non-linear region of the color space than in at least one linear region of the color space. Further, the color elements may be selected to split non-linear regions into linear sub-regions.

In some embodiments, the classification of the color space into non-linear regions and linear regions may be used in combination with other criteria in order to determine the colors of the elements to be printed. For example, the human eye is not particularly sensitive to the color yellow. Accordingly, deviations in yellow region of the color space may be less important than deviations in other regions of the color space. In this case, the manufacture (or other party) may select a lower density of elements of the color chart corresponding to a non-linear region in a yellow area of the color space than for a non-linear region in another area of the color space e.g. a red area of the color space.

### (Related Art of Inverse Matching Method)

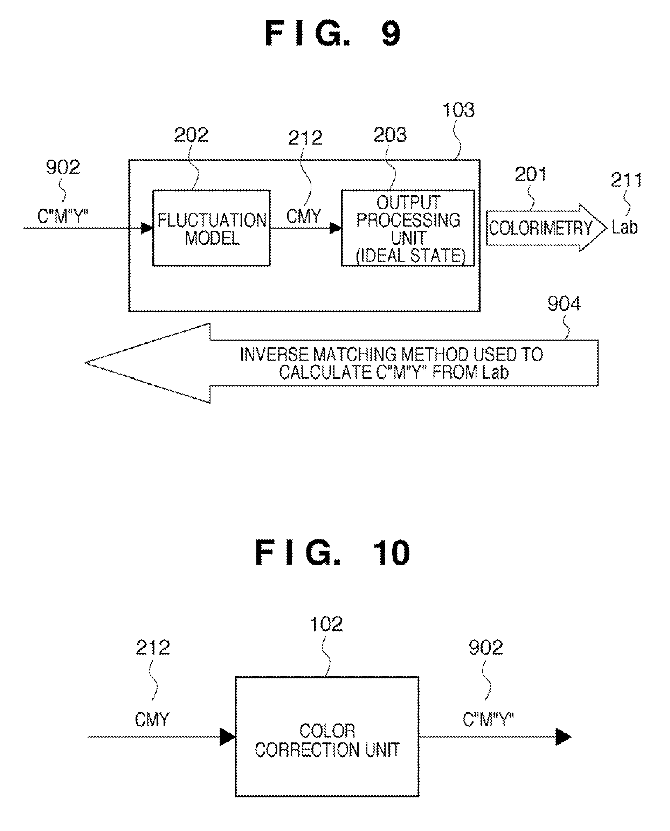

A related art of the inverse matching method 904 shown in Fig. 9 will be described below.

Fig. 11 is a view showing an LUT for one cube in which Lab values are associated with CMY grid points obtained in, for example, step S704. CMY values corresponding to Lab values 1101 contained in this CMY-Lab grid relationship are calculated by the inverse matching method as follows in the related art. That is, as shown in Fig. 12, a rectangular parallelepiped is divided to select polyhedral grids containing a target, and CMY values are calculated based on the relationship of CMY-Lab linear interpolation.

### (Example of Inverse Matching Method Using Starting Point of Fluctuation)

This embodiment uses an inverse matching method from a start point of fluctuation, which allows inverse matching estimation with higher accuracy than the related art.

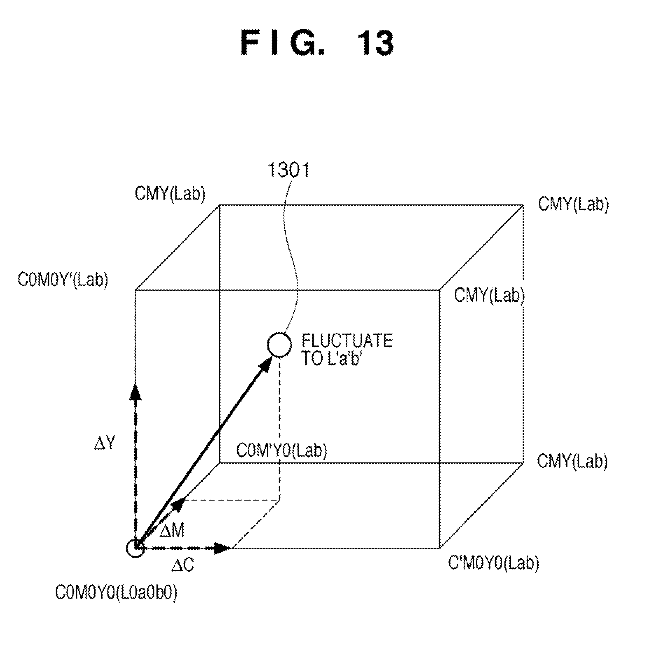

Fig. 13 is a view of an LUT for one cube in which Lab values are associated with CMY grid points obtained in step S704 as in Fig. 11. Assume that values C0M0Y0 have fluctuated to values L'a'b' 1301 although they ought to have been output as values L0a0b0.

Fluctuated CMY values obtained when values at a point C0M0Y0 as a start point have fluctuated from the values L0a0b0, and the values L'a'b' 1301 were reproduced are calculated as follows. That is, interpolation estimation is executed using a tetrahedral relationship defined by a point C'M0Y0 having displacement ΔC in a C-direction, a point C0M'Y0 having displacement ΔM in a M-direction, and a point C0M0Y' having displacement ΔY in a Y-direction, from the point C0M0Y0 as the start point.

The inverse matching method 904 used in step S801 in Fig. 8 applies the inverse matching method from the start point of fluctuation to all the reproduction colors Lab 211. With this method, since fluctuations having multi-dimensional fluctuation tendencies have uniform multi-dimensional interpolation estimation directions, multi-dimensional fluctuations can be estimated with higher accuracy as a whole.

### [Second Embodiment]

In the first embodiment, device values sent to the color correction unit 102 and those sent from the color correction unit 102 to the output processing unit 103 are CMY values without laying any K amount, for the sake of simplicity.

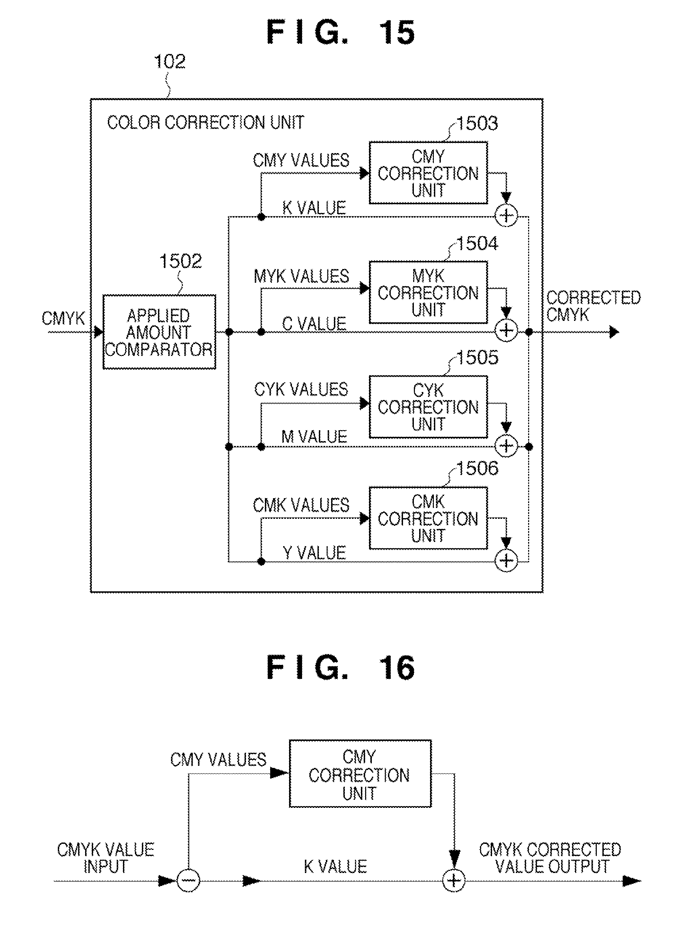

However, as shown in Fig. 16, a color correction processing unit may be configured in such a manner that the correction result of only three, that is, CMY colors is expanded to the entire CMYK colors, and a CMY correction unit corrects only CMY values while preserving a K amount of the CMYK colors intact in actual correction. In such case as well, since a correction effect for gray and flesh color, and colors having high brightness levels is high, a sufficient correction quality can be obtained.

Upon correcting four, that is, CMYK colors in practice, a color correction unit may include four correction units to always correct three colors which have larger applied amounts, that is, have stronger influences on fluctuations of the CMYK values.

### (Configuration and Procedure Example of Color Correction Unit of Second Embodiment)

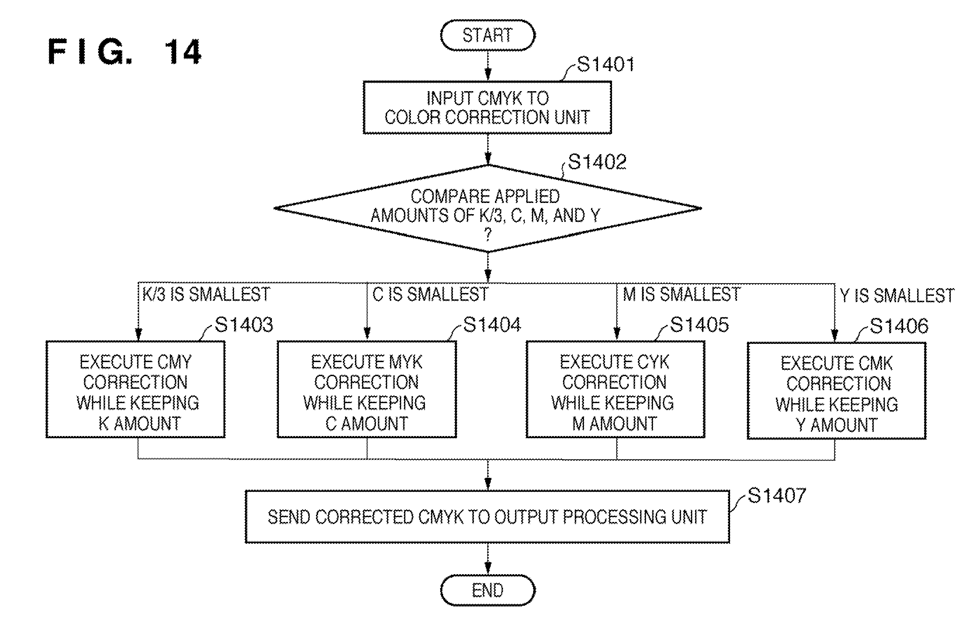

Fig. 14 is a flowchart of color correction corresponding to four CMYK inputs. Fig. 15 is a block diagram showing an example of the configuration of the color correction unit 102 corresponding to four CMYK inputs. A CMY correction unit 1503 is the CMY color correction unit, creation of which has been explained in this embodiment. An MYK correction unit 1504, CYK correction unit 1505, and CMK correction unit 1506 are configured by creating MYK, CYK, and CMK correction tables using the same method.

If CMYK values are sent to the color correction unit 102 in Fig. 15 in step S1401, the controller compares the applied amounts of, for example, a K/3 value (a value obtained by multiplying a K value by 1/3), C value, M value, and Y value using an applied amount comparator 1502 in step S1402. If the K/3 value is smallest, the controller determines that the K value of the received CMYK values has a smallest ratio of influence in fluctuations of reproduction colors, and the controller executes CMY correction with keeping the K amount using the CMY correction unit 1503 (step S1403).

Likewise, if the C value is smallest, the controller executes MYK correction with keeping the C amount using the MYK correction unit 1504 (step S1404). If the M value is smallest, the controller executes CYK correction with keeping the M amount using the CYK correction unit 1505 (step S1405). If the Y value is smallest, the controller executes CMK correction with keeping the Y amount using the CMK correction unit 1506 (step S1406). In this procedure, CMYK correction is implemented by sending the corrected CMYK to the output processing unit 103 (step S1407).

### [Other Embodiments]

In this embodiment, colors in the three-dimensional CIELab space are used as those in the device independent space for the sake of simplicity. However, for example, even when colors in a virtual color space of four dimensions or more such as LabPQR or colors in a spectrum color space are used, a four-dimensional CMYK - CMYK value correction table can be created by dimension expansion of the method exemplified in this embodiment.

Note that the present invention may be applied to a system or an integrated apparatus configured by a plurality of devices (for example, a host computer, interface device, and printer), or an apparatus including a single device.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
The following statements form part of the specification. The claims follow are labeled as such:
1. An image processing apparatus which comprises a color conversion unit (101) for converting input image data into color data corresponding to output colors of a printer, and a multinary color correction unit (102) for performing multinary color correction to the color data output from said color conversion unit,
   characterized by further comprising a creation unit for creating a fluctuation model (202) of the printer based on output colors (211) of a printer model (203) serving as a reference of correction and colorimetric values (903) of actual output colors,
   and **characterized in that** said multinary color correction unit (102) includes a setting unit for setting multinary color correction values of said multinary color correction unit (102) by an inverse matching method (904) based on the fluctuation model (202) of the printer and the printer model (203).
2. The apparatus according to statement 1, **characterized in that** said creation unit creates the fluctuation model of the printer by estimating interpolation from a color chart for measuring a printer state and the printer model.
3. The apparatus according to statement 2, **characterized in that** said creation unit creates the fluctuation model of the printer by measuring a printer state using the color chart for measuring the printer state, calculating a fluctuation difference of the measured printer state from the printer model serving as the reference of correction, estimating a fluctuation difference of the printer by interpolation, and calculating an entire printer state by combining the estimated fluctuation difference with the printer model serving as the reference of correction.
4. The apparatus according to statement 1, **characterized in that** said multinary color correction unit comprises a prepositive inverse conversion table for performing prepositive inverse conversion of the fluctuation model of the printer calculated by the inverse matching method, wherein the prepositive inverse conversion table performs color conversion to color data obtained by executing multinary color correction of device colors of the printer by said color conversion unit.
5. The apparatus according to statement 4, **characterized in that** the inverse matching method is a method of calculating device colors of a printer that outputs device independent color space values, in which method, device colors of the printer after fluctuation are estimated so as to obtain a device independent color space value corresponding to a device color in the printer model, from the device color of the printer model as a start point.
6. The apparatus according to any one of statements 1 to 5, **characterized in that** said color conversion unit converts input image data into first image data of CMYK values as device colors of a printer, and
   said multinary color correction unit corrects the first image data of CMYK values from said color conversion unit to second image data of CMYK values to be output to the printer including the fluctuation model.
7. The apparatus according to statement 6, **characterized in that** the printer model is served as a reference of correction of a printer and comprises an output profile table which defines output reproduction values with respect to multinary colors expressed by CMYK values as the device colors of the printer.
8. The apparatus according to statement 7, **characterized in that** the output reproduction colors are expressed by device independent color space values.
9. An image processing method which comprises a color conversion step (101) of converting input image data (210) into color data (212) corresponding to output colors of a printer, and a multinary color correction step (102) of performing multinary color correction to the color data (212) output from said color conversion step (101), characterized by further comprising a creation step (S701-S704) of creating a fluctuation model (202) of the printer based on output colors (211) of a printer model (203) serving as a reference of correction and colorimetric values (903) of actual output colors,
   and **characterized in that** in said creation step (S701-S704), the fluctuation model (S702) of the printer is created by measuring (S702) a printer state using a color chart for measuring the printer state, calculating (S702) a fluctuation difference of the measured printer state from the printer model serving as the reference of correction, estimating (S703) a fluctuation difference of the printer by interpolation, and calculating (S704) an entire printer state by combining the estimated fluctuation difference to the printer model serving as the reference of correction, and
   said multinary color correction step (102) includes a setting step (S801-S803) of setting multinary color correction values used in said multinary color correction step (102) by an inverse matching method (904) based on the fluctuation model (202) of the printer and the printer model (203), wherein the inverse matching method (904) is a method of calculating device colors of a printer that outputs device independent color space values, in which method, device colors (212) of the printer after fluctuation are estimated so as to obtain a device independent color space value corresponding to a device color in the printer model (203), from the device color of the printer model as a start point, and the inverse matching method (904) is performed using a prepositive inverse conversion table of the fluctuation model of the printer calculated by the inverse matching method (904), wherein the prepositive inverse conversion table performs color conversion to color data (212) obtained by executing multinary color correction of device colors of the printer in said color conversion step (101).
10. A program for making a computer execute respective steps of an image processing method according to statement 9.
11. A computer-readable storage medium storing a program according to statement 10.
The following statements form part of the specification. The claims follow are labeled as such:
1. An image processing apparatus configured to perform color correction, comprising:
   printing means for printing a plurality of colored patches corresponding to particular input image data values (212);
   measuring means for measuring the color of the printed colored patches (903));
   determining means for determining a conversion of the particular input image data values (212) to modified image data values (902) that will result in printed colors that are closer to the particular input image data values (212); and
   color correction means (102) for performing color correction of received image data by converting the received image data using the determined conversion prior to printing of the received image data by the printing means.
2. An image processing apparatus according to statement 1, wherein the determining means is configured to determine, for each colored patch, a difference between the measured color of the printed color patches (903) and the color corresponding to the input image data value of the colored patch (212).
3. An image processing apparatus according to statement 2, wherein the determining means is configured to interpolate the differences between the colors of the measured colored patches (903) and the colors corresponding to the input data values (212) of the colored patches in order to create difference data across a color space.
4. An image processing apparatus according to statement 2, wherein:
   the determining means is configured to determine a region of the color space of the input image data values (C,M,Y) in which the differences between the measured colors of the printed color patches (903) and the colors corresponding to the input image data values of the color patches (212) vary linearly, and a region of the color space in which the differences vary non-linearly, and
   the printing means is configured to select a higher density of particular input image data values in the non-linear region of the color space than in the linear region of the color space.
5. An image processing apparatus according to any preceding statement wherein the particular input image data values (212) are expressed by C,M,Y values.
6. An image processing apparatus according to any preceding statement wherein the modified image data values (902) are expressed by C,M,Y values.
7. An image processing apparatus according to any of statements 1 to 4, wherein the particular input image data values (212) are expressed by C,M,Y,K values.
8. An image processing apparatus according to statement 7, wherein the conversion means is configured to:
   determine which component of an input data value (212) is the smallest, the components being the cyan value, the magenta value, the yellow value, and one third of the black value;
   retain the color value of the input data value corresponding to the smallest component value without change; and
   to convert the other color values to create modified image data values.
9. A method for performing color correction of an image processing apparatus, comprising:
   printing a plurality of colored patches corresponding to particular input image data values (212);
   measuring the color of the printed color patches (903);
   determining a conversion of the particular input image data values (212) to modified image data values (902) that will result in printed colors that are closer to the particular input image data values (212); and
   performing color correction of received image data by converting the received image data using the determined conversion prior to printing.
10. A program that, when executed on an image processing apparatus, causes the image processing apparatus to perform a method according to statement 9.
11. A storage medium storing a program according to statement 10.

## Claims

1. A method for generating a color chart for a printer, which color chart comprises a plurality of elements, the method comprising the steps of:
obtaining reference color data representing colors output by the printer, when the printer is in a reference state;
obtaining comparison color data representing colors output by the printer, when the printer is in another state;
determining differences in color between corresponding elements of the reference color data and the comparison color data;
classifying at least one region of the output color space of the printer as a linear region in which the differences vary substantially linearly; and
selecting colors of the elements of the color chart on the basis of the linear region.

2. A method according to claim 1, wherein the colors of the elements are selected to allow a linear approximation of the difference data to be made across all or part of the linear region.

3. A method according to claim 2, wherein the colors of the elements are selected to include element colors that are on or close to a boundary of the linear region.

4. A method according to claim 1, wherein the step of obtaining reference color data comprises printing at least one color chart including a plurality of elements from the printer and measuring the printed elements with a colorimeter.

5. A method according to claim 1, wherein the step of obtaining comparison color data comprises printing at least one color chart including a plurality of elements from the printer and measuring the printer elements with a colorimeter.

6. A method according to claim 1, wherein elements of the reference color data and the comparison color data correspond if they relate to the same input color value.

7. A method according to claim 1, wherein further comprising a step of:
classifying at least one region of the output color space of the printer as a non-linear region in which the differences vary substantially non-linearly; and
wherein the selecting of the colors of the elements is made according to a scheme, which scheme tends to increase selection of colors in the non-linear region over colors in the linear region.

8. A method according to claim 1, wherein different states of the printer correspond to different environmental conditions in which the printer operates and/or different times of use of the printer.

9. A color chart created by a method according to any one of claims 1-8.

10. A printer comprising a color chart according to claim 9.

11. A program that, when executed by an information processing apparatus, causes the information processing apparatus to perform a method according to any of claims 1 to 8.

12. A storage medium storing a program according to claim 11.
